# EUROPÄISCHE PATENTANMELDUNG

(11) **EP 1 122 532 A2**
(43) Veröffentlichungstag der Anmeldung: **08.08.2001**
(21) Anmeldenummer: 01102035.1
(22) Anmeldetag: 30.01.2001
(51) Int. Cl.: G01M 17/02, G01M 17/007

(54) **Drehschwingungsprüfstand für Kraftfahrzeug- und/oder Reifenprüfung**

(30) Priorität: 01.02.2000 DE 10004209
(71) Anmelder: RENK AKTIENGESELLSCHAFT, 86159 Augsburg (DE)
(72) Erfinder: Cordes, Jörg, 46168 Plainfield, Indiana (US); Karrer, Mathias, 86637 Wertingen (DE)
(74) Vertreter: Schober, Stefan, Dipl.-Ing.

(57) **Zusammenfassung**

Die Erfindung betrifft einen Drehschwingungsprüfstand für Kraftfahrzeuge und/oder Reifen mit einem über zwei Trommelelemente (2,3) geführten, fahrbahnsimulierenden Kraftband (1) zum Aufsetzen eines Fahrzeugrades (4) und einem Rahmen (6), in dem die Trommelelemente (2,3) gelagert sind. Die Vorrichtung zwingt Drehschwingungen f_{Dreh} mittels mindestens einem an den beweglich gelagerten Rahmen (6) horizontal hin- und herbewegenden linearen Bewegungsmittel (8) dem Fahrzeugrad (4) auf.

Desweiteren betrifft die Erfindung ein Verfahren zum Einleiten von Drehschwingungen auf das Fahrzeugrad (4).

## Beschreibung

Die Erfindung betrifft einen Drehschwingungsprüfstand für Kraftfahrzeuge und/oder Reifen gemäß Oberbegriff des Anspruches 1. Desweiteren betrifft die Erfindung ein Verfahren zum Einbringen von Drehschwingungen auf einen Prüfling gemäß Oberbegriff des unabhängigen Anspruches 6.

### [Stand der Technik]

Es sind Flachbahneinheiten für Kraftfahrzeug-Prüfstände bekannt, wobei ein fahrbahnsimulierendes Band über relativ kleine Umlenkwalzen geführt und im Aufstandsbereich eines Fahrzeugrades flacheben abgestützt sind.
Um eine flachebene Ausgestaltung des Bandes der oben genannten Flachbahneinheiten zu erzielen, sind die Umlenkwalzen derart beabstandet voneinander angeordnet, daß sie keine tragende Wirkung auf das Fahrzeugrad ausüben. Außerdem ist eine Vielzahl von Stützrollen, Stützwalzen oder ähnlichen zur Abstützung oder Führung des Bandes dienenden Elementen innenseitig an dieses Band angestellt, um die flachebene Ausgestaltung des Bandes zu bewerkstelligen. Der Antrieb des Bandes erfolgt über eine mittig zwischen den beiden Umlenkwalzen liegende, das Band außenseitig berührende Stützwalze.

### [Aufgabe der Erfindung]

Der Erfindung liegt die Aufgabe zugrunde, oben genannte Prüfstände für Kraftfahrzeuge derart auszugestalten, daß die Simulation von unterschiedlichen Drehschwingungen am Antriebsstrang des Kraftfahrzeuges möglich ist und ein Verfahren zu schaffen, mit dem diese Schwingungen dem Kraftfahrzeug beibringbar sind.

Erfindungsgemäß wird die Aufgabe durch die Merkmale der kennzeichnenden Teile der übergeordneten Ansprüche gelöst. Ausgestaltungen ergeben sich aus den Unteransprüchen sowie aus der Beschreibung in Verbindung mit den Zeichnungen.

Ein die Fahrbahn simulierendes Kraftband wird über zwei Trommelelemente geführt, die relativ dicht beieinander in einem verschiebbar gelagerten Rahmen angeordnet sind.
Bei der flachebenen Ausgestaltung des Kraftbandes liegt der Prüfling auf dem Prüftrum kraftschlüssig und satt an, ohne daß zusätzliche Stützrollen oder Stützwalzen benötigt werden. Desweiteren erfolgt der Antrieb des Kraftbandes über mindestens ein angetriebenes Trommelelement, mittels diesem eine rotative Bewegung auf den auf dem Kraftband befindlichen Prüfling eingebracht wird.
Der Antrieb des Trommelelementes erfolgt mittels mindestens eines Antriebes.
Besonders hervorzuheben ist, daß der konstanten rotativen Bewegung eine zusätzliche, diese konstante rotative Bewegung überlagernde, variable Drehschwingung auf den auf der Flachbahneinheit bzw. dem Prüftrum befindlichen Prüfling eingeleitet wird.
Die Einleitung der Drehschwingung in die Flachbahneinheit erfolgt über ein am verschiebbar gelagerten Rahmen horizontal angeordnetes lineares Bewegungsmittel, so daß aus dieser vom linearen Bewegungsmittel auf die Flachbahneinheit eingeleiteten horizontalen Hin- und Herbewegung eine Bewegung resultiert, welche als eine die konstante rotative Bewegung überlagernde Drehschwingung wirkt.
Selbstverständlich kann die jeweilige oben beschriebene Bewegung von mehreren Antrieben bewerkstelligt werden.

Die Erfindung betrifft auch ein Verfahren zum Aufzwingen von Drehschwingungen auf einen Prüfling.
Die Verfahrensmerkmale sind in dem unabhängigen Anspruch 6 wiedergegeben. Im Einzelnen ist das Verfahren der nachfolgenden Beschreibung in Verbindung mit den Zeichnungen zu entnehmen.

### [Beispiele]

Die Erfindung soll nachstehend an einem Ausführungsbeispiel näher erläutert werden. Es zeigt schematisch:
Fig. 1 eine Seitenansicht eines Drehschwingungsprüfstandes nach der Erfindung mit darauf befindlichem Kraftfahrzeugrades,
Fig. 2 eine Seitenansicht des Drehschwingungsprüfstandes nach Fig. 1 und
Fig. 3 ein Diagramm einer der Drehbewegung überlagerten Drehschwingung.

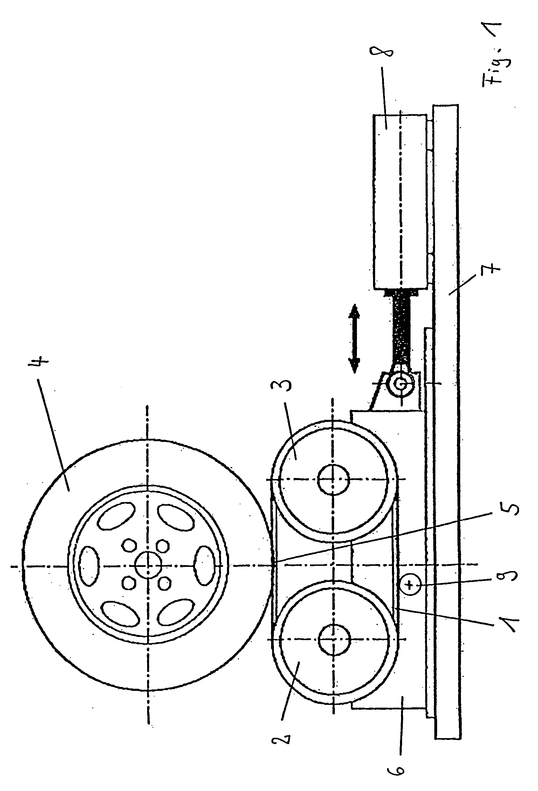

In Fig. 1 ist ein Kraftband (1) endlos ausgebildet und um zwei Trommelelemente (2,3) geführt.
Auf einem Prüftrum (5) des Kraftbandes (1) ist das Kraftfahrzeugrad (4) aufsetzbar, wobei dieses entweder an einem Fahrzeug oder einem speziellen Prüfrahmen gelagert ist.
Das Kraftfahrzeugrad (4) liegt kraftschlüssig und satt auf dem Prüftrum (5) an.

Die Trommelelemente (2,3) sind jeweils begrenzt translatorisch verschiebbar in dem Rahmen (6) gelagert, um die Spannung des auf diesen befindlichen Kraftbandes (1) zu verstellen.
Der Rahmen (6) ist horizontal verschiebbar auf einem Rahmen (7) gelagert. Am Rahmen (6) ist ein lineares Bewegungsmittel (8) angeordnet, das auf dem Rahmen (7) gelagert ist.
Um die Spannung des Kraftbandes (1) zu verstellen ist auch ein Spannmittel (9), insbesondere eine Spannrolle, verwendbar, welches mit einem nicht dargestellten Bewegungsmechanismus des Standes der Technik zum Kraftband (1) an- und abstellbar ist.

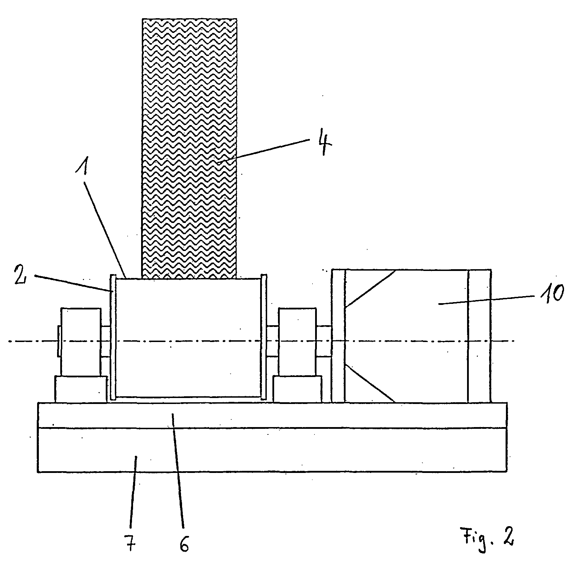

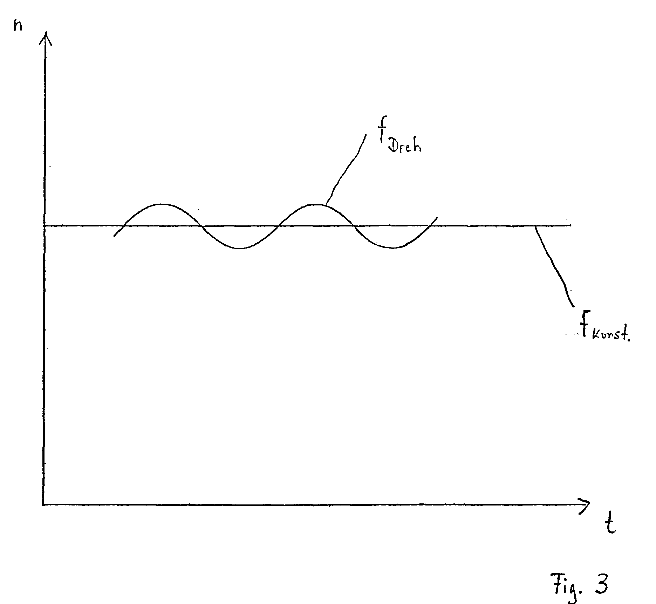

Mindestens ein Trommelelement (2,3) ist rotatorisch antreib- bzw. abbremsbar. Ein dafür erforderlicher Antrieb (10) ist in der Fig. 2 gezeigt. Der Antrieb (10) ist auf dem Rahmen (6) angeordnet. Als Antrieb (10) ist ein Hydraulikmotor oder ein Elektromotor vorgesehen.
Mittels diesem Antrieb (10) wird eine rotative Bewegung fₖₒₙₛₜ. auf das auf dem Kraftband (1) befindliche Kraftfahrzeugrad (4) eingebracht. Zusätzlich zu dieser konstanten rotativen Bewegung fₖₒₙₛₜ. wird eine variable Drehschwingung f_{Dreh} überlagert (siehe Fig. 3), die beide auf das Kraftfahrzeugrad (4) einwirken.
Diese variable Drehschwingung f_{Dreh} wird durch den am horizontal verschiebbar gelagerten Rahmen (6) angeordneten linearen Bewegungsmittel (8) bewerkstelligt. Das lineare Bewegungsmittel (8), bevorzugt ein druckmittelbetriebener Linearzylinder, leitet seine lineare Hin- und Herbewegung auf den beweglich gelagerte Rahmen (6) ein, so daß mittels dieser auf den Rahmen (6) eingeleiteten Bewegung eine Bewegung resultiert, welche als eine die konstante rotative Drehbewegung fₖₒₙₛₜ. überlagernde Drehschwingung f_{Dreh} wirkt.

Mit dem beschriebenen linearen Bewegungsmittel lassen sich Drehschwingungen f_{Dreh} bis zu maximal 100 Hz auf ein Kraftfahrzeugrad (4) einbringen.

Die Erfindung soll sich nicht nur auf die Verwendung von endlosen Kraftbändern (1) beschränken. Es ist auch an einen Einsatz von endlichen Kraftbänder (1) zu denken, die nach dem Aufbringen auf die beiden Trommelelemente (2,3) mit Verfahren oder Mitteln nach dem bekannten Stand der Technik in eine endlosen Zustand übergeführt werden.

### [Bezugszeichenliste]

- 1: Kraftband
- 2: Trommelelement
- 3: Trommelelement
- 4: Prüfling
- 5: Trum
- 6: Rahmen
- 7: Rahmen
- 8: lineares Bewegungsmittel
- 9: Spannmittel
- 10: Antrieb
- fₖₒₙₛₜ.: Rotative Bewegung
- f_{Dreh}: Drehschwingung

## Patentansprüche

1. Drehschwingungsprüfstand für Kraftfahrzeuge und/oder Reifenprüfstand mit einem über zwei Trommelelemente (2,3) geführten, fahrbahnsimulierenden Kraftband (1) zum Aufsetzen eines Fahrzeugrades (4) und einem Rahmen (6), in dem die Trommelelemente (2,3) gelagert sind, dadurch gekennzeichnet, daß Drehschwingungen f_{Dreh} mittels mindestens einem den beweglich gelagerten Rahmen (6) horizontal hin- und herbewegenden linearen Bewegungsmittel (8) dem Fahrzeugrad (4) aufzwingbar sind.

2. Drehschwingungsprüfstand nach Anspruch 1, dadurch gekennzeichnet, daß mittels mindestens eines durch eine Antriebsvorrichtung (10) angetriebenen Trommelelementes (2,3) eine konstante rotative Bewegung fₖₒₙₛₜ. dem Fahrzeugrad (4) aufzwingbar ist.

3. Drehschwingungsprüfstand nach Anspruch 2, dadurch gekennzeichnet, daß die Antriebsvorrichtung (10) ein Hydraulikmotor ist.

4. Drehschwingungsprüfstand nach Anspruch 2, dadurch gekennzeichnet, daß die Antriebsvorrichtung (10) ein Elektromotor ist.

5. Drehschwingungsprüfstand nach Anspruch 1, dadurch gekennzeichnet, daß das lineare Bewegungsmittel (8) ein druckmittelbetriebener Linearzylinder ist.

6. Verfahren mit Hilfe des Drehschwingungsprüfstandes nach Anspruch 1, dadurch gekennzeichnet, daß mittels einer horizontalen Anregung des verschiebbar gelagerten Rahmens (6) eine Drehschwingung f_{Dreh} bis maximal 100 Hz dem Fahrzeugrad (4) aufgezwungen wird.
